# EUROPEAN PATENT APPLICATION

(11) **EP 3 944 198 A1**
(43) Date of publication of application: **26.01.2022**
(21) Application number: 20186982.3
(22) Date of filing: 21.07.2020
(51) Int. Cl.: G06T 11/20, G01C 21/00, G06F 16/29, G06T 11/60, G09B 29/10

(54) **ZOOMING AND SCALING**

(71) Applicant: Transport For London, Stratford London E20 1JN (GB)
(72) Inventor: GAMMON, Ben, London, E20 1JN (GB); KOPS, Hanna, London, E20 1JN (GB); GRAY, Alex, London, E20 1JN (GB); GROVES, Richard, London, E20 1JN (GB)
(74) Representative: CSY Herts

(57) **Abstract**

A method for the computerised display of an information graph, comprising the steps of recording the information graph in a database as series of drawing objects, each object belonging to a class, storing a plurality of scaling factors and associating each scaling factor with a respective class of drawing object, receiving user input denoting a zoom factor, determining which objects will be displayed at the requested zoom factor taking account of the current map portion to be displayed and the display area on which it will be drawn, applying the scaling factors by processing the zoom factor and the scaling factor together for each drawing object to produce an effective scale for each drawing object, and drawing each drawing object that has been determined to be displayed, at the effective scale of each respective drawing object.

## Description

The present invention relates to methods and apparatus for the computerised display and change of the zoom level and/or data labels of an information graph, whilst retaining styling cues that aid human readability.

In a system holding map elements as vector or other non-bitmap, digital representations of an information graph, such as a map and in particular a map for a railway system such as the London underground system ("The Tube"), human presentation of the graph require choices to be made about how the vector elements are represented at different zoom levels. This ensures that the graph is assimilated and quickly understood, at those different zoom levels.

This is a complex problem which cannot, in real time, be dealt with manually. It requires fast processing and logic to generate an information graph which at all zoom levels is easily read and understood.

There are a small number examples of a railway map recreated in code - but they are either in SVG (Scalable Vector Graphics) format, or in HTML/CSS - which do not have the features to support zooming or real-time redrawing of the map based on live information and do not include the ability to implement automated rules around the presentation of the map under scaling operations.

In a first aspect, the invention provides a method for the computerised display of an information graph, comprising the steps of recording the information graph in a database as series of drawing objects, each object belonging to a class, storing a plurality of scaling factors and associating each scaling factor with a respective class of drawing object, receiving user input denoting a zoom factor, determining which objects will be displayed at the requested zoom factor taking account of the current map portion to be displayed and the display area on which it will be drawn, applying the scaling factors by processing the zoom factor and the scaling factor together for each drawing object to produce an effective scale for each drawing object, and drawing each drawing object that has been determined to be displayed, at the effective scale of each respective drawing object.

In a second aspect, the invention provides a computer program product directly loadable into the internal memory of a digital computer, comprising software code portions for performing the steps of the method aspect above, when said product is run on a computer.

In a third aspect the invention provides a computer system comprising an execution environment for running computer code portions and arranged to carry out the method aspect above.

The invention will now be described, by way of example, with reference to the drawings in which:-
Figure 1 is a schematic diagram showing a portion of a railway map ;
Figure 2 is a portion of the map of Figure 1, shown zoomed out; and
Figure 3 is an enlarged portion of the map of Figure 1, shown zoomed in.

The embodiment described below relates to an iOS/iPadOS software application. The skilled person will appreciate that the same principles can be applied to an application for other mobile computing platforms such as Android, or for desktop operating systems such as Linux, Mac OS or Windows.

The core functionality is a system for displaying a Digital Tube map with differing data, and/or at different zoom levels. In the prior art digital representations of the Tube Map, a map image is stored as a fixed, static representation such a PNG or PDF file. When this is scaled, the elements are simply all scaled uniformly and the data which is available for viewing at any particular zoom level is cropped according to the size of the display screen. In the present invention, instead, a topologically correct map is stored and drawn dynamically in computer program code. The map can then be dynamically scaled when a user requests a zoom in or out operation. The entire map can also be redrawn in a different way to provide a different set of data labels on the map, based on data feeds - such as disruption on the rail system - or user preferences such as accessibility needs.

The question of how to adjust the stored representation of the map before it is displayed to a user, at different zoom levels is complex. The invention uses a set of predefined principles which are embodied in rules, to create a mechanised, automated relationship between the stored map objects, and how they are drawn on a display at different zoom levels. This mechanised relationship is explained in more detail below.

For the current description, we use the following definitions:-
**Zoom scale** - the absolute zoom amount e.g. 100% zoom = 1.0 zoom scale.
**Zoom level** - discrete integer values that increase in ratios of 1.5 with zoom scale.
**Effective scale** - the zoom scale with scaling in and out factors applied.

The present invention improves on the prior art simple scaling operation of a fixed or static image, by recognising that to give a correct and understandable result, not all aspects of the map should be adjusted in displayed size, at the same rate, when zooming in or out.

Thus, scaling in and scaling out factors are used to make items on the map scale at different rates during zooming. So items are then drawn with a ratio called the "Effective scale" applied, and which is determined by the class of drawing object. The different factors may also be at different scales when the requested zoom scale requests zooming out from 100% and/or zooming in from 100%.

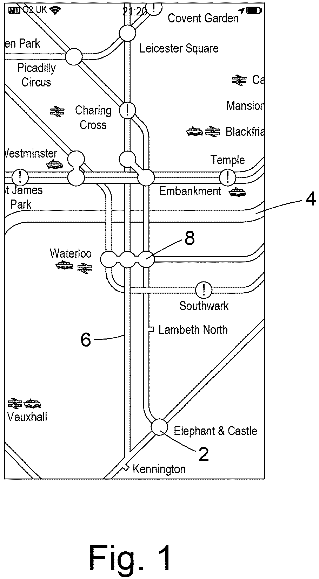

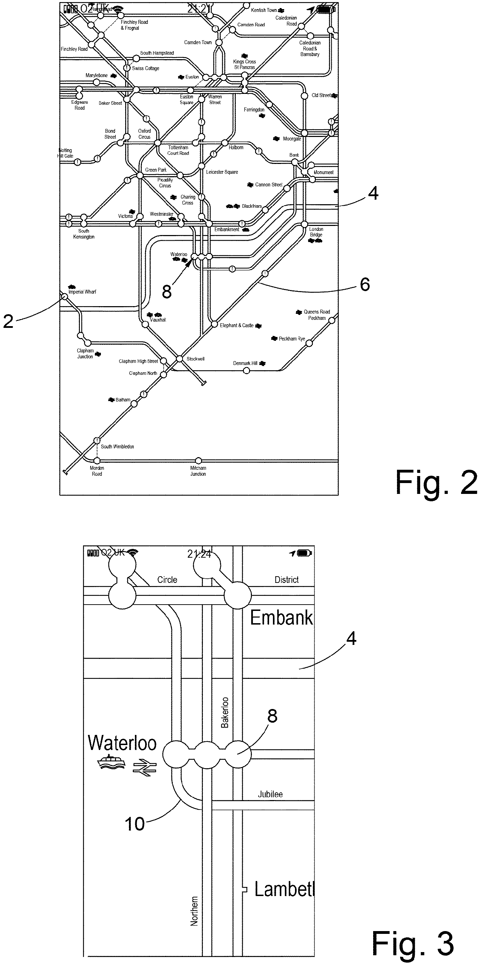

The map of Figure 1 shows a portion of the London tube map at this notional 100% scale i.e. without being zoomed in or out. It will be noted that the map has stations 2, geographical features such as a river 4, and interconnecting lines between the stations 6. Figures 2 and 3, show a portion of this map around Waterloo station 8, at different zoom levels.

To maintain a readily understandable appearance for the map, different object on the map are zoomed by different amounts when the map is drawn at different zoom levels.

In the preferred embodiment, a scaling in or out factor of 0.0 produces no scaling to be applied when zooming and the item will then grow or shrink directly proportionate to the zoom scale. i.e. lines appear to get thinner when zooming out and thicker when zooming in. Conversely, a scaling in factor of 1.0 produces 100% scaling i.e. lines remain the same thickness during zoom.

The table below shows some exemplary scaling factors to be applied to different map objects.

| **Class of Drawing Object** | **Scaling in Factor** | **Scaling out Factor** |
|---|---|---|
| **Lines** | 0.425 | 0.0 |
| **Stops** | 0.425 | 0.0 |
| **Decorations** | 0.425 | 0.6 |
| **River** | 1.0 | 0.0 |
| **Labels** | 0.333 | 0.0 |
| **Location** | 0.425 | 0.8 |

As an example, to convert zoom scale to effective scale, the following Swift function may be used:

```
 func effectiveScale(zoomScale: CGFloat, inFactor: CGFloat, outFactor: CGFloat) -> CGFloat {
        return 1 + (zoomScale - 1) * (zoomScale <= 1 ? outFactor : inFactor)
 }
```

In this example, different scaling factors are applied depending whether the map is being scaled out from 100%, or scaled in from 100%. Thus it will be seen that the "out factor" or "in factor" are chosen depending on whether the requested zoom scale is less than, or equal to one. This thus provides different scaling depending on whether the object is being drawn at less than its natural, 100%, scale or at more than its natural scale. Of course, the skilled person will appreciate that in a simpler embodiment, the same scaling factor may be applied both for scaling in and scaling out, but still based on particular class of drawing object.

Thus, taking a River 4 as an example, and based on the table above, when scaling below natural 100% size As shown in Figure 3, the River size remains constant and is not enlarged beyond its natural size (Scaling in factor = 1.0). However, when it is scaled out beyond 100%, the Scaling out factor is 0.0, and the River will become smaller as the map is scaled out, at the same proportion as the requested zoom scale, as shown in Figure 2. It will be noted that for the purposes of this patent description, Figure 3 is shown in enlarged form. In the practical embodiment of this invention, the river width is the same in Figures 1 and 3.

To increase the usability of the user interface, instead of a user explicitly entering a particular zoom ratio, the system defines a set of granular zoom levels. Typically, the zoom input will be made using a pinch-to-zoom gesture on a touch screen. This by its very nature does not provide input of discrete zoom levels. In the preferred embodiment, these granular levels increase by a factor of 1.5 as the zoom level increases. This is shown in the table below. The skilled person will appreciate that other ratios may be used between the zoom levels and also the ratio between each zoom level may not be constant. For example, the ratio between zoom level three and four might be 1.25, whereas the ratio between level four and five might be 1.5.

### Zoom Level Conversion

| **Zoom Level** | **Zoom Scale** | **Zoom Percentage** |
|---|---|---|
| 3 (min) | 0.29 | 29% |
| 4 | 0.44 | 44% |
| 5 | 0.66 | 66% |
| 6 | 1.00 | 100% |
| 7 | 1.50 | 150% |
| 8 (max) | 2.25 | 225% |

To convert between zoom level and zoom scale, this exemplary Swift code could be used, which demonstrates that using the same ratio between each level, allows logarithmic functions to be used to convert between level and scale in a particularly simple way. The skilled person will of course, appreciate that this could be achieved in other ways, such as with a look-up table:

```
 func zoomLevel(zoomScale: CGFloat) -> Int {
        return Int(round(6 + (log(zoomScale) / log(1.5))))
 }
 func zoomScaleForLevel(zoomLevel: Int) -> Double {
        return exp((Double(zoomLevel) - 6) * log(1.5))
 }
```

It will be appreciated that at different zoom levels, different parts of the map are visible. Thus not all objects in the object database are drawn on the map at any one time. Thus before drawing commences, it is necessary to determine which objects will be displayed at the requested zoom factor and taking account of the current map portion to be displayed and the display size or canvas on which it will be drawn. The display size may vary between devices and data on this can be accessed by the drawing API for the particular device.

For the drawing of lines which in the preferred embodiment, represent rail lines, it is necessary to adjust the width of the line during zooming, the position of adjacent lines during zooming and also the way that turns, or corners, are represented during zooming.

### Line Width

In the case of the width of a line, a line is drawn with a width which is proportional to the reciprocal of effective scale so that Width = OriginalWidth / EffectiveScale. Therefore, during a zoom in operation (zoom scale increases), the line width decreases (scaling in factor less than 1.0, e.g. 0.425), however as the visible bounds of the map also decrease, this gives the impression of the line maintaining constant width (with constant scaling).

### Line Offset

Line offset is applied where there are multiple adjacent lines. This offset changes with zoom scale to account for the change in line width. The offset is applied by moving the axis of the line laterally so that the line is drawn parallel with its non-offset position. Without applying offset, an undesirable gap is introduced between adjacent lines when zooming in due to the decreasing line width. In the preferred embodiment, offset values are stored for each stop on the line. Offset for each stop on a line is defined by the offset amount (in multiples of original line width) and preferably also angle (degrees). The resulting offset vector for a stop is the scaled offset amount at the angle specified. Thus for each line passing through that stop, the offset is retrieved with reference to the stop.

### Centering Stops

In the London tube map, stops are typically drawn as black, unfilled circles, and where multiple different lines converge, but have significant distances between platforms, with multiple such circles linked by black lines. Stops that have accessible platforms may instead be indicated using circular symbols such as the universal wheelchair symbol.

To ensure the stops remain centred on top of lines during zoom, offset is also applied to these. In the preferred embodiment, the offset is equal to the average of the offsets for each line which passes through the stop, which ensures that they sit substantially in the centre of the combined adjacent lines.

### Corner/Turn Scaling

For the stylistic rules of the London tube map, for example, the corner angles are limited to multiples of 45 degrees. The skilled person will appreciate that other map styles may allow different angles to be used. However drawing the map at different scales to a high quality standard, requires more than simply choosing one of the four 45 degree increments and drawing that angle the same way at all scaling levels.

For the correct appearance, it is also necessary to scale the turns at corners. Thus in the preferred embodiment, the radius of turns in a line is proportional to the reciprocal of effective scale so that the radius of the turn which is actually drawn relative to the original radius (the unscaled, natural radius), is Radius = OriginalRadius / EffectiveScale.

Therefore, as the map is zoomed in, the radius decreases, however as the visible bounds also decrease, this gives the impression of the line turns maintaining constant radius (with constant scaling).

All of these principles taken together can be readily seen by making a comparison between Waterloo station 8 shown in figures 1, 2 and 3. For example, looking at the interconnecting lines between the station elements and the spacing between the three station elements, it will be noted that at the zoom scale shown in Figure 3, the spacing between the stations is proportionately much larger than that shown in Figure 1, or figure 2 . This is a consequence of the line offset scaling effect, in combination with the station centering effect as described above. Accordingly, it will be noted that the spacing between the lines is much larger in Figure 3 proportionately, than in Figures 1 and 2. Similarly, the corner 10 shown just below and on the left side of Waterloo station 8, can be seen to be different in Figure 3 than in Figures 1 and 2. All of these differences appear natural at first glance but are systematic and automated adaptations made during zooming, using the arrangements, database and rule systems described above.

### Label Visibility

To avoid labels, such as the name of stops becoming congested and overlapping when the map is significantly zoomed in, the visibility of labels is restricted at certain zoom levels and/or zoom scale ranges. Labels are filtered so that they are visible within, but hidden outside of the zoom ranges specified. Also, the labels may be switched on or off using a user-controllable visibility flag, so that a user may choose what information Should be displayed according to their preferences. When the visibility flag is toggled, an animation duration, preferably of 0.3s, is used to produce a fading effect for the labels.

| | Zoom Level Range Visible | Zoom Scale Range Visible |
|---|---|---|
| **Line name labels** | 7 → max | 1.50 → max |
| **Stop Labels (tick)** | 4.3 → max | 0.5 → max |
| **Stop Labels (interchange)** | 3.4 → max | 0.35 → max |

As noted above, the pinch gesture on the map using a touch screen, allows input of a relatively continuous range of zoom levels. Thus this table shows that visibility of labels may be controlled according to intermediate positions between the granular zoom levels described above. The hybrid effect being that labels may appear or disappear at zoom levels where the size of the lines and other map elements do not change on the map.

## Claims

1. A method for the computerised display of an information graph, comprising the steps of:-
i. Recording the information graph in a database as series of drawing objects, each object belonging to a class,
ii. Storing a plurality of scaling factors and associating each scaling factor with a respective class of drawing object,
iii. Receiving user input denoting a zoom factor,
iv. Determining which objects will be displayed at the requested zoom factor taking account of the current map portion to be displayed and the display area on which it will be drawn,
v. Applying the scaling factors by processing the zoom factor and the scaling factor together for each drawing object to produce an effective scale for each drawing object, and
vi. Drawing each drawing object that has been determined to be displayed, at the effective scale of each respective drawing object.

2. A method as claimed in claim 1, wherein a class of drawing object has two scale factors associated with it, which are applied depending on whether the object is to be drawn at less than or more than its natural scale.

3. A method as claimed in claim 1 or claim 2, wherein one of the drawing classes is a class of line objects and wherein the method includes storing an offset value associated with a line object and which is scaled with the scale factor for line objects so that the line is drawn axially offset by the scaled offset value.

4. A method as claimed in claim 3, wherein the offset value is a vector and includes a scalar value and an angle so that the line is drawn offset by the vector after scaling by the scale factor.

5. A method as claimed in claim 3 or claim 4, wherein offset value is associated with a stop class of object and wherein the offset value for line objects passing through that stop object are retrieved with reference to that stop object.

6. A method as claimed in any of claims 3 to 5, wherein the stop objects are drawn over the line objects at a position offset by the average of the offset value of all lines passing through the stop object.

7. A method as claimed in any preceding claim, including the step of storing an angle for a corner object where two line objects join, and wherein the method further comprises scaling the radius of the turn proportional to the reciprocal of the effective scale for corner objects.

8. A method as claimed in any preceding claim, wherein the method includes drawing label objects and wherein a range of zoom factors are associated with a label object so that the label object is only drawn in a predetermined range of zoom factors, in order to avoid excessive clutter on the displayed information graph.

9. A method as claimed in any preceding claim, wherein the zoom factor is a zoom ratio or a zoom level and wherein the zoom level is a set of integer values which are each representative of a different zoom ratio.

10. A computer program product directly loadable into the internal memory of a digital computer, comprising software code portions for performing the steps of any preceding claim, when said product is run on a computer.

11. A computer system comprising an execution environment for running computer code portions and arranged to carry out the method of any of claims 1 to 9.
